# EUROPÄISCHE PATENTANMELDUNG

(11) **EP 4 691 967 A1**
(43) Veröffentlichungstag der Anmeldung: **11.02.2026**
(21) Anmeldenummer: 24192901.7
(22) Anmeldetag: 05.08.2024
(51) Int. Cl.: C01B 3/04, B01J 8/02, B01J 23/38

(54) **KOAXIALES KATALYSATORSYSTEM FÜR DIE AMMONIAKSPALTUNG**

(71) Anmelder: Heraeus Precious Metals GmbH & Co. KG, 63450 Hanau (DE)
(72) Erfinder: Maier, Dirk, 63450 Hanau (DE); Krois, Konrad, 63450 Hanau (DE); Breuer, Christian, 63450 Hanau (DE); Santiago, Casu, 63450 Hanau (DE); Chang, Kai-Chin, 63450 Hanau (DE)
(74) Vertreter: Heraeus IP

(57) **Zusammenfassung**

Die Erfindung betrifft ein Katalysatorsystem zur Spaltung von Ammoniak in Wasserstoff und Stickstoff, umfassend mindestens Rohr mit einer zentral durch das innere des Rohrs verlaufenden Achse, wobei in dem Rohr mindestens zwei koaxial angeordnete Bereiche, in Form von einem ersten Bereich entlang der zentralen Achse und mindestens einem den ersten Bereich umgebenden weiteren Bereich, ausgebildet sind, und wobei der erste Bereich ein erstes Katalysatormaterial und der mindestens eine weitere Bereich mindestens ein weiteres Katalysatormaterial enthält, dadurch gekennzeichnet, dass a) das erste Katalysatormaterial mindestens ein Metall aufweist, das ausgewählt ist aus der Gruppe bestehend aus Edelmetallen und Nicht-Edelmetalle, und b) das mindestens eine weitere Katalysatormaterial mindestens ein Nicht-Edelmetall aufweist. Das erste und das mindestens eine weitere Katalysatormaterial sind verschieden.

## Beschreibung

Die vorliegende Erfindung betrifft ein Katalysatorsystem zur Spaltung von Ammoniak in Wasserstoff und Stickstoff, sowie ein Verfahren zur Ammoniakspaltung bei dem das Katalysatorsystem verwendet wird.

Weltweit laufen Bestrebungen fossile Energieträger durch Energieträger aus regenerativen Quellen zu ersetzen. Da durch Windkraftanlagen oder Solarzellen gewonnene Energie in Form von Strom schwierige zu speichern ist, insbesondere über längere Zeiträume, sind andere Wege der Energiespeicherung erforderlich. Neben physikalischen Speichern, z.B. Pumpspeichern, spielen chemische Speichertechnologien eine wichtige Rolle. Große Hoffnungen werden in de Speicherung von Energie in Form von Wasserstoff gesetzt, bei der der unmittelbar gewonnene Strom zur Elektrolyse von Wasser in Wasserstoff und Sauerstoff verwendet wird.

Ein Vorteil der Speicherung von Energie in Form von Wasserstoff ist, dass er einen sehr hohen gravimetrischen Energiegehalt hat, d. h. er kann im Vergleich zu Kohlenwasserstoffen wie Erdgas, Benzin oder Diesel mehr als doppelt so viel Energie pro Gewicht speichern. Leider hat er aber gleichzeitig eine sehr geringe Dichte. Daher ist sein volumetrischer Energiegehalt im Vergleich zu vielen anderen Energieträgern, wie z. B. Kohlenwasserstoffen, geringer (etwa ein Drittel von Erdgas). Das bedeutet, dass für die Speicherung der gleichen Energiemenge mit Wasserstoff ein dreimal so großer Tank oder ein dreimal so hoher Druck verglichen mit Erdgas nötig ist.

Dies erschwert die Speicherung und den Transport von Wasserstoff, weshalb nicht nur die Herstellung (Elektrolyse), sondern auch die Speicherung von Wasserstoff erhebliche Energiemengen erfordert, z.B. werden ca. 12 % des Energiegehalts des Wasserstoffs für die Verdichtung auf einen Druck von 700 bar oder ca. 20-30 % für die kryogene Verflüssigung (Abkühlung auf -252.882 °C) benötigt.

Darüber hinaus kommt es bei der kryogenen Wasserstoffverflüssigung und dem Transport von flüssigem Wasserstoff aufgrund unvermeidlicher Wärmeisolationsverluste zu Verdampfung. Um zu verhindern, dass der Druck in den Tanks zu stark ansteigt, wird das Wasserstoffgas über ein Überdruckventil abgelassen, d.h. beim Transport treten Verluste auf.

Mit dem Ausbau der Wasserstoffwirtschaft werden daher bessere und einfacher zu handhabende Wasserstoffspeichertechnologien benötigt.

Eine vielversprechende Möglichkeit, Wasserstoff zu speichern, ist Umwandlung in Ammoniak und die reversible Zersetzung in Wasserstoff und Stickstoff. Ammoniak kann ähnlich wie Erdgas in einfachen Druckbehältern bei ca. acht bar in flüssiger Form gespeichert werden. Im Vergleich zu komprimiertem Wasserstoff weist es sogar eine höhere Energiedichte auf als dieser. Dies vermeidet die bereits erwähnten Probleme bei der Verflüssigung und dem Transport.

Ein großer Vorteil von Ammoniak ist, dass es in großem Maßstab produziert werden kann, da es der Grundstoff für die meisten Stickstoffverbindungen ist und mit über 200 Millionen Tonnen pro Jahr bereits zu den weltweit am häufigsten produzierten Chemikalien gehört. Daher sind sowohl das Produktions-Know-how als auch die Infrastruktur bereits vorhanden.

Normalerweise wird Ammoniak nach dem Haber-Bosch-Verfahren hergestellt, bei dem Wasserstoff mit Stickstoff aus der Luft in einer katalytischen Reaktion reagiert. Sofern der Wasserstoff aus erneuerbaren Quellen erzeugt wird, ist der Ammoniak kohlenstoffneutral, da kein Kohlenstoff beteiligt ist. Daher kann Ammoniak als emissionsfreier Energiespeicher in einem zukünftigen emissionsfreien Energiesystem verwendet werden.

Neben der direkten Verbrennung ist die Rückgewinnung des Wasserstoffs aus dem Ammoniak durch "Ammoniakspaltung" oder "Ammoniak-Cracking" eine weitere Möglichkeit, bei der das Ammoniak über einen Katalysator geleitet wird, der den Wasserstoff und Stickstoff freisetzt. Der entstehende Wasserstoff kann dann z. B. in Brennstoffzellen oder für chemische Prozesse verwendet werden.

Anders als das oben erwähnte Haber-Bosch-Verfahren, das seit mehr als 100 Jahren angewandt wird, ist das Spalten von Ammoniak in Wasserstoff und Stickstoff weniger verbreitet und die Prozesse sind weniger ausgereift.

Die im Stand der Technik bekannten Katalysatorsysteme verwenden zur katalytischen Ammoniakspaltung Festbettreaktoren, bei denen mehrere Katalysatormaterialen sequentiell entlang der Strömungsrichtung angeordnet sind. Ein bekannter Ansatz wird zum Beispiel in CN110203882B und EP3059206A1 beschrieben, bei dem Ammoniak nacheinander mit Katalysatoren auf Nickelbasis, gefolgt von Katalysatoren auf Rutheniumbasis in Kontakt gebracht wird. Dieses Konzept sieht zwei klar definierte Reaktionszonen vor, bei denen die erste Zone eine höhere Temperatur aufweist, um die Reaktion zu initiieren, und die zweite Zone eine niedrigere Temperaturzone aufweist, um die Reaktion zu einem vollständigen Umsatz zu führen.

Eine Herausforderung bei dieser Art der industriellen Ammoniakspaltung ist die Degradation der Ruthenium-Katalysatoren. Ein wesentlicher Faktor ist dabei die thermische Degradation, die systembedingt durch zu hohe Temperaturen in der Nähe der Reaktorinnenwand auftreten kann. Um einen ausreichenden Wärmeeintrag in den Reaktor zu gewährleisten, liegt die Reaktoraußentemperatur deutlich über der Betriebstemperatur des eigentlichen Katalysators. Die eingesetzten Rohrreaktoren werden von außen beheizt. Dazu werden üblicher Weise Gasbrenner verwendet. Dies führt aufgrund von Wärmeleitungseffekten dazu, dass der Katalysator im direkten Kontakt mit der Innenwand Temperaturen oberhalb von 700°C, und damit im Fall von Ruthenium außerhalb seines Stabilitätsfensters ausgesetzt wird. Dies reduziert die Leistungsfähigkeit, Lebensdauer oder Einsatzfähigkeit, was häufige Wartungsintervalle verursacht, die den kontinuierlichen Betrieb unterbrechen.

Aufgabe der vorliegenden Erfindung bestand in der Bereitstellung eines verbesserten Katalysatorsystems für die Spaltung von Ammoniak in Wasserstoff und Stickstoff. Insbesondere bestand die Aufgabe darin, mindestens einen der folgenden Aspekte des Katalysatorsystems zu verbessern:
- die katalytische Effizienz des Katalysatorsystems,
- die thermische Belastung von Katalysatormaterial,
- die Lebensdauer des Katalysatorsystems bzw. dessen Einsatzfähigkeit in einem Rohrbündelreaktor, und
- den Abstand zwischen erforderlichen Wartungsintervallen eines Rohrbündelreaktors für die Ammoniakspaltung.

Mindestens eine der genannten Aufgaben wird gelöst durch ein Katalysatorsystem zur Spaltung von Ammoniak in Wasserstoff und Stickstoff, umfassend mindestens Rohr mit einer zentral durch das innere des Rohrs verlaufenden imaginären Achse, wobei in dem Rohr mindestens zwei koaxial angeordnete Bereiche, in Form von einem ersten Bereich entlang der zentralen Achse und mindestens einem den ersten Bereich umgebenden weiteren Bereich, ausgebildet sind, und wobei
der erste Bereich ein erstes Katalysatormaterial und der mindestens eine weitere Bereich mindestens ein weiteres Katalysatormaterial enthält, dadurch gekennzeichnet, dass
   a. das erste Katalysatormaterial mindestens ein Metall aufweist, das ausgewählt ist aus der Gruppe bestehend aus Edelmetallen und Nicht-Edelmetalle, und
   b. das mindestens eine weitere Katalysatormaterial mindestens ein Nicht-Edelmetall aufweist,
wobei das erste und das mindestens eine weitere Katalysatormaterial verschieden sind.

Durch das erfindungsgemäße Katalysatorsystem kann das erste Katalysatormaterial vor hohen Temperaturen geschützt werden, die zu einer Degradation dieses Katalysatormaterials führen.

Durch das erfindungsgemäße Katalysatorsystem, insbesondere durch die koaxial Anordnung, wird temperaturbeständiges Katalysatormaterial direkt an der Reaktorwand angeordnet und schirmt somit thermisch weniger stabiles Katalysatormaterial im Inneren des Rohrs vor zu hohen Temperaturen ab. Dadurch wird die thermische Belastung des Katalysatormaterials im Kern reduziert, was zu einem geringeren thermischen Verschleiß des gesamten Katalysatorsystems führen kann.

Das Katalysatorsystem der vorliegenden Erfindung enthält vorzugsweise mindestens zwei Katalysatormaterialien, die vorzugsweise beide die Spaltung von Ammoniak in Wasserstoff und Stickstoff katalysieren. Das Katalysatorsystem ist insbesondere ein Festbett-Katalysatorsystem, bei dem Katalysatormaterialien von gasförmigen Stoffen durchströmt werden. Das Katalysatorsystem kann auch als Rohrreaktor bezeichnet werden. Mehrere Rohre können zu einem Rohrbündelreaktor zusammengefasst werden.

Die Katalysatormaterialien der vorliegenden Erfindung sind vorzugsweise dazu geeignet Ammoniak in Wasserstoff und Stickstoff zu spalten.

Das Katalysatorsystem umfasst mindestens ein Rohr. Als Rohr im Sinne der Erfindung kann insbesondere ein Hohlkörper oder ein Abschnitt eines Hohlkörpers verstanden werden, der eine Wand, insbesondere eine gasundurchlässige Wand und zwei Öffnungen aufweist. Das Rohr weist eine erste Öffnung und eine zweite, der ersten Öffnung gegenüberliegende, Öffnung auf. Die Wand des Rohrs hat eine in das Innere gerichtete Innenwand und eine Außenseite. Das Rohr ist so ausgestaltet, dass Gas von der ersten Öffnung zur zweiten Öffnung durch das Rohr strömen kann. Dabei dann die erste Öffnung auch als Gaseinlassöffnung bezeichnet werden und die zweite Öffnung als Gasauslassöffnung. Die Strömungsrichtung ist vorzugsweise von der ersten Öffnung zur zweiten Öffnung gerichtet. Als Rohr im Rahmen der Erfindung kann insbesondere der Teil eines Hohlkörpers verstanden werden, in dem mindestens ein Katalysatormaterial oder mehrere Katalysatormaterialien vorliegen. Sowohl vor als auch hinter dem Rohr können optional weitere Teile oder Komponenten angeordnet sein. In einer Ausgestaltung ist das Rohr des Katalysatorsystems senkrecht ausgerichtet. Alternativ kann es auch waagerecht ausgerichtet sein. Optional kann das Rohr an seiner ersten oder zweiten Öffnung oder an beiden eine gasdurchlässige Begrenzung aufweisen. Die gasdurchlässige Begrenzung kann bewirken, dass ein Katalysatormaterial nicht aus dem Rohr heraustreten kann. Die gasdurchlässige Begrenzung kann beispielsweise ein Netz, oder ein Gitter sein. An der Außenwand des Rohres kann mindestens eine Heizvorrichtung angeordnet sein. Die Heizvorrichtung können ausgewählt sein aus elektrischen Heizvorrichtungen, Salzschmelzen und Brennern. Das Katalysatorsystem kann Teil eines Rohrbündelreaktors sein. In einer möglichen Ausgestaltung befindet sich die Heizvorrichtung näher an der ersten Öffnung als an der zweiten Öffnung.

Das Rohr ist vorzugsweise zylinderförmig, kann jedoch auch jede andere Form annehmen, die der Fachmann für zweckmäßig erachtet. Beispielsweise kann das Rohr einen elliptischen, viereckigen oder mehreckigen Querschnitt aufweisen. Das Rohr kann optional teil eines Rohrbündelreaktors sein.

Die Dimensionen des Rohrs sind grundsätzlich nicht weiter beschränkt. Im Rahmen der vorliegenden Erfindung kann der Durchmesser des Rohres mindestens 5 cm, bevorzugt mindestens 10 und insbesondere mindestens 15 cm betragen. Im Rahmen der vorliegenden Erfindung kann der Durchmesser des Rohres höchstens 50 cm, bevorzugt höchstens 25 cm und insbesondere höchstens 15 cm betragen. Die Länge des Rohrs entlang der zentralen Achse kann im Bereich von 1 m - 20 m liegen.

Das Rohr weist eine zentral durch das innere des Rohrs verlaufenden imaginäre Achse auf. Anders ausgedrückt verläuft diese imaginäre Achse so durch das Rohr, dass sie, insbesondere bei einem zylindrischen Rohr, von gegenüberliegenden Rohrinnenwänden gleich weit entfernt ist.

In dem Rohr sind mindestens zwei koaxial angeordnete Bereiche ausgebildet. Der Grundgedanke der Erfindung besteht darin, dass diese mindestens zwei koaxialen Bereiche das Rohr senkrecht zur Strömungsrichtung unterteilen und im an die Rohrwand angrenzenden Bereich ein gegen thermische Zersetzung stabileres Katalysatormaterial angeordnet ist, das das Katalysatormaterial im Kern vor zu hohen Temperaturen abschirmen kann. Zusätzlich können Segmente, einen Bereich entlang der Strömungsrichtung unterteilen. Die mindestens zwei Bereiche erstrecken sich vorzugsweise jeweils von der ersten Öffnung des Rohres zur zweiten Öffnung des Rohres. Die mindestens zwei koaxialen Bereiche sind ausgebildet in Form von einem ersten Bereich entlang der zentralen Achse und mindestens einem den ersten Bereich partiell oder vollständig umgebenden weiteren Bereich. Der erste Bereich entlang der zentralen Achse kann auch als Kern verstanden werden. Der mindestens eine weitere Bereich kann auch als Mantel verstanden werden, der den Kern umgibt. Der mindestens eine weitere Bereich nimmt bevorzugt den Raum zwischen dem erstem Bereich (Kern) und der Innenwand des Rohres ein. Optional können in dem Rohr auch zwei oder mehr weitere Bereiche, insbesondere koaxiale Bereiche, ausgebildet sein. Anders ausgedrückt können in dem Rohr um den Kern mehrere Mantelbereiche angeordnet sein, die den Kern in mehreren Schichten umgeben. Der mindestens eine weitere Bereich kann den ersten Bereich vollständig umgeben. Alternativ kann der erste Bereich teilweise, beispielsweise lokal, bis an die Innenwand des Rohres heranreichen. Dies bedeutet, dass der Kernbereich partiell durch den mindestens einen Mantelbereich hindurch reichen kann.

In einer vorteilhaften Ausgestaltung des Katalysatorsystems ist mindestens zwischen zwei aneinander angrenzenden Bereichen eine Trennvorrichtung angeordnet. Falls weitere Bereiche vorhanden sind, könne diese auch durch Trennvorrichtungen voneinander getrennt sein. Eine Trennvorrichtung kann die Bereiche so voneinander trennen, dass das jeweils in einem Bereich vorliegendes Katalysatormaterial nicht in einen anderen Bereich gelangen kann. Insbesondere kann eine geeignete Trennvorrichtung verhindern, dass es zwischen aneinander angrenzenden Bereichen zu einer Durchmischung von Katalysatormaterialien kommen kann. Eine Trennvorrichtung kann im Rahmen der Erfindung beispielsweise ein Netz, ein Gitter, ein Lochblech oder eine Kombination daraus sein. Vorzugsweise ermöglicht die Trennvorrichtung mindestens einen Wärme- oder Gastransport zwischen benachbarten Bereichen, oder beides.

Der erste Bereich enthält ein erstes Katalysatormaterial und der mindestens eine weitere Bereich enthält mindestens ein weiteres Katalysatormaterial. Das erste und das mindestens eine weitere Katalysatormaterial sind verschieden voneinander. Falls mehrere weitere Bereiche vorhanden sind, enthält jeder weitere Bereich mindestens ein weiteres Katalysatormaterial. Die weiteren Katalysatormaterialien können gleich sein oder sich voneinander unterscheiden. Zumindest ein weiteres Katalysatormaterial unterscheidet sich vorzugsweise von dem ersten Katalysatormaterial.

In einer bevorzugten Ausführungsform ist der erste Bereich vollständig mit dem ersten Katalysatormaterial befüllt. Alternativ ist der erste Bereich nur teilweise mit dem ersten Katalysatormaterial befüllt. In einer weiteren möglichen Ausgestaltung des Katalysatorsystems ist der erste Bereich entlang der Strömungsrichtung segmentiert. Im Rahmen der vorliegenden Erfindung kann die Segmentierung eines Bereichs entlang der Strömungsrichtung es ermöglichen die Verteilung von Katalysatormaterial besser an das Temperaturprofil des Katalysators im Betrieb anzupassen. Der erste Bereich kann zum Beispiel zwei oder mehr Segmente aufweisen. Das zweite oder jedes weitere Segment können vor oder hinter dem ersten Segment angeordnet sein. In einer Ausgestaltung kann in einem ersten Segment im ersten Bereich das erste Katalysatormaterial vorliegen, insbesondere ausschließlich vorliegen. Des Weiteren kann in einem zweiten Segment des ersten Bereichs ein Katalysatormaterial vorliegen, dass vom ersten Katalysatormaterial verschieden ist. Optional kann im zweiten Segment des ersten Bereichs das mindestens eine weitere Katalysatormaterial aus dem mindestens einen weiteren Bereich vorliegen. Optional kann im zweiten Segment des ersten Bereichs ein Katalysatormaterial vorliegen, dass vom ersten Katalysatormaterial und vom mindestens einen weiteren Katalysatormaterial verschieden ist. Ein solches Katalysatormaterial kann auch als anderes Katalysatormaterial bezeichnet werden. Weiterhin kann im Rahmen der Erfindung in einem Segment eines Bereichs optional kein Katalysatormaterial vorliegen.

Optional können im Rahmen der Erfindung zwischen einem oder mehreren Segmenten Segmentierungselemente vorliegen. Segmentierungselemente können beispielsweise ausgewählt sein aus Netzen, Gittern, Lochblechen oder Kombinationen daraus. Segmentierungselemente können dazu dienen die Durchmischung von verschiedenen Katalysatormaterialien zu vermeiden.

In einer bevorzugten Ausführung ist der mindestens eine weitere Bereich vollständig mit mindestens einem weiteren Katalysatormaterial befüllt. Alternativ ist der mindestens eine weitere Bereich nur teilweise mit dem mindestens einen weiteren Katalysatormaterial befüllt.

Um diese Ausführung zu realisieren, kann eine Trennvorrichtung zwischen dem ersten und dem mindestens einen weiteren Bereich angeordnet sein.

In einer weiteren möglichen Ausgestaltung des Katalysatorsystems ist der mindestens eine weitere Bereich entlang der Strömungsrichtung segmentiert. Der mindestens eine weitere Bereich kann zum Beispiel zwei oder mehr Segmente aufweisen. Das zweite oder jedes weitere Segment können vor oder hinter dem ersten Segment des mindestens einen weiteren Bereichs angeordnet sein. In einer segmentierten Ausgestaltung kann in dem ersten Segment des mindestens einen weiteren Bereich das mindestens eine weitere Katalysatormaterial vorliegen, insbesondere ausschließlich vorliegen. Des Weiteren kann in einem zweiten Segment des mindestens einen weiteren Bereichs ein Katalysatormaterial vorliegen, dass vom mindestens einen weiteren Katalysatormaterial verschieden ist. Optional kann im zweiten Segment des mindestens einen weiteren Bereichs das erste Katalysatormaterial aus dem ersten Bereich vorliegen. Optional kann im zweiten Segment des ersten Bereichs ein Katalysatormaterial vorliegen, dass vom ersten Katalysatormaterial und vom mindestens einen weiteren Katalysatormaterial verschieden ist. Ein solches Katalysatormaterial kann auch als anderes Katalysatormaterial bezeichnet werden.

Die anderen Katalysatormaterialien aus dem ersten und dem mindestens einen weiteren Bereich können gleich oder verschieden sein. Durch den Einsatz von anderen Katalysatormaterialien ist es beispielsweise möglich die katalytische Aktivität oder die thermische Stabilität an das Temperaturprofil anzupassen, dass im Katalysatorsystem im Betrieb vorliegt.

Der erste Bereich weist einen Durchmesser d1 auf und der mindestens eine weitere Bereich weist eine Dicke d2 auf. Für den Fall, dass zwei oder mehr weitere Bereiche vorliegen, können diese weiteren Bereiche die Dicken d3, d4, und so weiter aufweisen. Der Durchmesser d1 und die zweifachen Dicke der weiteren Bereiche ergeben in Summe den Innendurchmesser des Rohres. Der Platzbedarf der Trennvorrichtungen kann hierbei unberücksichtigt bleiben.

Vorzugsweise nimmt der Durchmesser d1 des ersten Bereichs im Kern 60 - 90% des gesamten Innendurchmessers des Rohres ein. Auf diese Weise kann das Katalysatormaterial des ersten Bereichs gut vor hohen Temperaturen geschützt werden.

Der Durchmesser d1 des ersten Bereichs kann innerhalb des Rohres konstant sein oder variable. Wenn d1 variable ist, ändert er sich vorzugsweise kontinuierlich. Der Durchmesser d1 kann von der ersten Öffnung hin zur zweiten Öffnung zunehmen oder abnehmen.

Der Dicke d2 des mindestens einen weiteren Bereichs kann innerhalb des Rohres konstant sein oder variable. Wenn d2 variable ist, ändert sich d2 vorzugsweise kontinuierlich. Die Dicke d2 kann von der ersten Öffnung zur zweiten Öffnung hin zunehmen oder abnehmen.

Der erste Bereich weist ein erstes Katalysatormaterial auf und der mindestens eine weitere Bereich weist mindestens ein weiteres Katalysatormaterial auf.

Dadurch, dass das erste Katalysatormaterial zumindest teilweise von mindestens einem weiteren Katalysatormaterial umgeben ist, ist das erste Katalysatormaterial nur teilweise oder gar nicht mit der Innenwand des Rohrs in Kontakt. Dadurch kann die thermische Belastung des ersten Katalysatormaterials im Betrieb verringert werden.

Das erste Katalysatormaterial weist mindestens ein Metall auf. Besonders bevorzugt weist das mindestens eine Metall eine hohe katalytische Aktivität für die Spaltung von Ammoniak in Wasserstoff und Stickstoff auf. Vorzugsweise kann eine hohe katalytische Aktivität ein vollständiger Gleichgewichtsumsatz von Ammoniak bei einer Temperatur von höchstens 550 °C bei einer typischen Raumgeschwindigkeit im Bereich von 4000 - 6000 1/h bedeuten.

Das mindestens eine Metall kann elementar oder in Mischungen, z.B. als Legierung, vorliegen.

Das mindestens eine Metall ist ausgewählt aus der Gruppe bestehend aus Edelmetallen und Nicht-Edelmetallen.

Dass erste Katalysatormaterial kann beispielsweise genau ein Metall aufweisen oder eine Mischung aus mehreren Metallen enthalten. Mehrere Metalle können entweder jeweils elementar oder als Legierung vorliegen. Beispielsweise kann das erste Katalysatormaterial sowohl Edelmetall als auch Nicht-Edelmetall enthalten. Optional weist das erste Katalysatormaterial nur ein Metall auf. Besonders bevorzugt ist das eine Metall ein Edelmetall.

Das mindestens eine Edelmetall kann ausgewählt sein aus der Gruppe bestehend aus Platin, Palladium, Rhodium, Ruthenium und Iridium. Besonders bevorzugt umfasst das Edelmetall Ruthenium oder besteht daraus. Ruthenium weist eine besonders hohe katalytische Aktivität für die Zersetzung von Ammoniak auf.

Das mindestens eine Nicht-Edelmetall im ersten Katalysatormaterial ist vorzugsweise ausgewählt aus der Gruppe bestehend aus Lithium, Nickel, Eisen und Kobalt sowie Mischungen aus diesen Nicht-Edelmetallen.

Das erste Katalysatormaterial kann optional ein Trägermaterial umfassen. Das Trägermaterial liegt vorzugsweise als Schüttgut, insbesondere als Pulver, Granulat oder Pellets vor. Typische maximale Durchmesser von Pellets liegen z. B. im Bereich von 1 - 25 mm. Monolithische Trägermaterialien, z.B. in Form von Waben, sind jedoch auch möglich.

Das Trägermaterial des ersten Katalysatormaterials kann eine Keramik, ein Glas oder Mischungen daraus enthalten oder daraus bestehen. Keramiken können vorzugsweise als kristalline anorganische Materialien verstanden werden und Gläser als amorphe anorganische Materialien. In einer möglichen Ausführungsform kann das Trägermaterial Kohlenstoff enthalten oder daraus bestehen.

Die Keramik ist bevorzugt eine Oxidkeramik, eine Nitridkeramik, eine Carbidkeramik oder eine Mischung daraus. Oxidkeramiken umfassen beispielsweise Refraktärmetalloxide, insbesondere Aluminiumoxid, Titanoxid, Zirkonoxid und Silikate. Nitridkeramiken umfassen beispielsweise Aluminiumnitrid und Siliziumnitrid. Carbidkeramiken umfassen beispielsweise Siliziumcarbid.

Optional kann das Trägermaterial der vorliegenden Erfindung, insbesondere des ersten Katalysatormaterials, ein Dotierungsmittel aufweisen. Das Dotierungsmittel kann ausgewählt sein aus der Gruppe bestehend aus Yttrium, Alkalimetallen, z.B. Kalium, Erdalkalimetallen, z.B. Calcium, Barium, Strontium, und Lanthanoiden, z.B. Lanthan, Cer, Neodym. Das Dotierungsmaterial kann beispielsweise in einer Menge von 1 - 10 Gew.-% enthalten sein, bezogen auf das Gesamtgewicht des erste Katalysatormaterials.

Vorzugsweise ist das mindestens eine Metall des ersten Katalysatormaterials auf der Oberfläche des Trägermaterials angeordnet. Das mindestens eine Metall kann z.B. chemisch oder physikalisch an der Oberfläche des Trägermaterials angebunden, d.h. adsorbiert, sein. Im Falle von porösen Trägermaterialien kann die Oberfläche des Trägermaterials auch die innenliegende Oberfläche in Poren einschließen, sofern diese Poren zugänglich sind.

Vorzugsweise enthält das erste Katalysatormaterial mindestens 0,25 Gew.-%, bevorzugt mindestens 0,5 Gew.-%, insbesondere mindestens 1 Gew.-% Metall, bezogen auf das Gesamtgewicht dieses Katalysatormaterials.

Vorzugsweise enthält das erste Katalysatormaterial höchstens 8 Gew.-%, bevorzugt höchstens 6 Gew.-%, insbesondere höchstens 4 Gew.-% Metall, bezogen auf das Gesamtgewicht dieses Katalysatormaterials.

In einer Ausführungsform enthält das erste Katalysatormaterial 0,25 - 6 Gew.-% Metall, insbesondere 0,5 - 2 Gew.-%, bezogen auf das Gesamtgewicht dieses Katalysatormaterials.

Für den Fall, dass das erste Katalysatormaterial sowohl Edelmetall als auch Nicht-Edelmetall enthält, kann das molare Verhältnis von Edelmetall zu Nicht-Edelmetall beispielsweise im Bereich von 1:10 bis 10:1 liegen.

Das mindestens eine weitere Katalysatormaterial in dem Katalysatorsystem weist mindestens ein Nicht-Edelmetall auf. Besonders bevorzugt weist das mindestens eine Nicht-Edelmetall eine katalytische Aktivität für die Spaltung von Ammoniak in Wasserstoff und Stickstoff auf. Üblicher Weise ist die katalytische Aktivität des mindestens einen weiteren Katalysatormaterials für die Spaltung von Ammoniak geringer als die katalytische Aktivität des ersten Katalysatormaterials. In einem Beispiel kann die katalytische Aktivität des mindestens einen weiteren Katalysatormaterials, aufweisend mindestens ein Nicht-Edelmetall, einen vollständigen Gleichgewichtsumsatz von Ammoniak bei einer Temperatur von mindestens 650°C aufweisen, gemessen bei einer typischen Raumgeschwindigkeit im Bereich von 4000 - 6000 1/h.

Das mindestens eine weitere Katalysatormaterial kann eine Mischung aus mehreren Nicht-Edelmetallen enthalten. Mehrere Nicht-Edelmetalle können entweder jeweils elementar oder als Legierung vorliegen.

Das mindestens eine Nicht-Edelmetall im mindestens einen weiteren Katalysatormaterial ist vorzugsweise ausgewählt aus der Gruppe bestehend aus Lithium, Nickel, Eisen und Kobalt sowie Mischungen dieser Nicht-Edelmetalle. Besonders bevorzugt enthält dieses mindestens eine Nicht-Edelmetall Nickel oder besteht daraus. Nickel bietet einen guten Kompromiss zwischen katalytischer Aktivität und thermischer Stabilität.

Das mindestens eine weitere Katalysatormaterial kann optional ein Trägermaterial enthalten. Das Trägermaterial des mindestens einen weiteren Katalysatormaterials liegt vorzugsweise als Schüttgut, insbesondere als Pulver, Granulat oder Pellets vor. Die Größen der Pellets entsprechen typischer Weise denen des ersten Katalysatormaterials. Monolithische Trägermaterialien, z.B. in Form von Waben, sind jedoch auch möglich.

Das Trägermaterial des mindestens einen weiteren Katalysatormaterials kann eine Keramik, ein Glas oder Mischungen daraus enthalten oder daraus bestehen. Keramiken können vorzugsweise als kristalline anorganische Materialien verstanden werden und Gläser als amorphe anorganische Materialien. In einer möglichen Ausführungsform kann das Trägermaterial Kohlenstoff enthalten oder daraus bestehen. Geeignete Kohlenstoffmaterialien sind dem Fachmann bekannt und können ohne erfinderisches Zutun ausgewählt werden.

Oxidkeramiken umfassen beispielsweise Refraktärmetalloxide, insbesondere Aluminiumoxid, Titanoxid, Zirkonoxid sowie Silikate. Nitridkeramiken umfassen beispielsweise Aluminiumnitrid oder Siliziumnitrid. Carbidkeramiken umfassen beispielsweise Siliziumcarbid.

Vorzugsweise ist das mindestens eine Nicht-Edelmetall des mindestens einen weiteren Katalysatormaterials auf der Oberfläche des Trägermaterials angeordnet. Im Falle von porösen Trägermaterialien kann die Oberfläche des Trägermaterials auch die innenliegende Oberfläche in Poren einschließen, sofern diese Poren zugänglich sind.

Das mindestens einen weitere Katalysatormaterial enthält vorzugsweise Nicht-Edelmetall in einer Menge von mindestens 3 Gew.-%, insbesondere mindestens 5 Gew.-% und besonders bevorzugt mindestens 10 Gew.-%, bezogen auf das Gesamtgewicht dieses Katalysatormaterials.

Das mindestens einen weitere Katalysatormaterial enthält vorzugsweise Nicht-Edelmetall in einer Menge von höchstens 40 Gew.-%, insbesondere höchstens 30 Gew.-%, bezogen auf das Gesamtgewicht dieses Katalysatormaterials.

Das mindestens einen weitere Katalysatormaterial enthält vorzugsweise Nicht-Edelmetall in einer Menge von 5 - 40 Gew.-% bezogen auf das Gesamtgewicht dieses Katalysatormaterials.

Das erste Katalysatormaterial weist vorzugsweise eine geringere Stabilität gegenüber thermischer Deaktivierung auf als das mindestens eine weitere Katalysatormaterial. In diesem Zusammenhang beträgt die Abnahme der katalytischen Aktivität des mindestens einen weiteren Katalysatormaterials höchstens 10%, bezogen auf die Ausgangsaktivität bei einer Reaktionstemperatur von >650°, insbesondere 700°C. Weiterhin kann die Abnahme der katalytischen Aktivität des ersten Katalysatormaterials mehr als 10% betragen, bezogen auf die Ausgangsaktivität bei einer Reaktionstemperatur von >650°, insbesondere bei 700°C. Die katalytischen Aktivitäten der Katalysatormaterialien werden für diesen Vergleich jeweils bei denselben Bedingungen gemessen in einem Rohrreaktor, insbesondere einem Rohrreaktor, wie er hierin beschrieben ist. Die Raumgeschwindigkeit liegt hierzu vorzugsweise im Bereich von 4000 - 6000 1/h. Der Betrachtungszeitrum für die Verringerung der Aktivität liegt vorzugsweise bei einer Betriebsdauer von 14 Tagen, insbesondere von 7 Tage und ganz besonders bevorzugt von 3 Tagen.

Das erste und das mindestens eine weitere Katalysatormaterial liegen vorzugsweise räumlich getrennt in dem ersten beziehungsweise mindestens einen weiteren Bereich vor. In einer Ausführungsform enthält der erste Bereich kein weiteres Katalysatormaterial aus dem mindestens einen weiteren Bereich. Alternativ kann der erste Bereich nicht mehr als 5 Gew.-%, insbesondere nicht mehr als 10 Gew.-% oder nicht mehr als 20 Gew.-% des mindestens einen weiteren Katalysatormaterials enthalten, bezogen auf das Gesamtgewicht aller Katalysatormaterialien des ersten Bereichs. Das mindestens eine weitere Katalysatormaterial im ersten Bereich kann in einem eigenen Segment vorliegen, oder mit dem ersten Katalysatormaterial vermischt sein. Insbesondere für den Fall, dass keine Trennvorrichtungen im Katalysatorsystem vorliegen, kann es zu einer Durchmischung der Katalysatormaterialien aus verschiedenen Bereichen kommen.

In einer möglichen Ausführung enthält der mindestens eine weitere Bereich kein erstes Katalysatormaterial. Insbesondere kann mindestens ein Segment des mindestens einen weiteren Bereichs kein erstes Katalysatormaterial enthalten. Alternativ liegt im mindestens einen weiteren Bereich nicht mehr als 5 Gew.-%, insbesondere nicht mehr als 10 Gew.-% des ersten Katalysatormaterials vor, bezogen auf das Gesamtgewicht aller Katalysatormaterialien in dem mindestens einen weiteren Bereich. Von dieser Betrachtung kann Abrieb, der im Laufe des Betriebs des Katalysators entsteht, ausgenommen sein.

Sowohl der erste Bereich als auch der mindestens eine weitere Bereich kann ein anderes Katalysatormaterial enthalten. Vorzugsweise liegt dieses andere Katalysatormaterial in einem Segment vor, insbesondere liegt es in einem Segment ausschließlich vor. Das andere Katalysatormaterial kann ein oder mehrere Metalle aufweisen, die ausgewählt sind aus der Gruppe bestehend Platin, Palladium, Rhodium, Ruthenium Iridium, Lithium, Nickel, Eisen und Kobalt sowie Mischungen dieser Metalle.

Das andere Katalysatormaterial kann ein Trägermaterial enthalten, wie es für das erste oder das mindestens eine weitere Katalysatormaterial hierin beschrieben ist.

Optional kann das Katalysatorsystem weitere Komponenten enthalten. Beispielsweise kann an der zweiten Öffnung des Rohrs, also an der Seite des Gasauslasses eine Gasauffangvorrichtung angeordnet sein. Die Gasauffangvorrichtung kann die Reaktionsprodukte auffangen, die beim Durchströmen des Rohrs entstehen. An die Gasauffangvorrichtung kann eine Abgasleitung angeschlossen sein. Die Abgasleitung kann das Gas, das aus dem Rohr austritt und durch die Gasauffangvorrichtung eingesammelt wird ableiten. Optional kann die Abgasleitung durch das Innere des Rohrs geführt werden. Damit kann die Abgasleitung auch durch mindestens einen Bereich des Katalysatorsystems geführt werden. Die Führung der Abgasleitung kann der Fachmann ohne erfinderisches Zutun so vornehmen wie er es für zweckdienlich hält. Durch die Rückführung der Abgasleitung durch das Rohr, insbesondere durch einen Bereich des Katalysatorsystems, kann eine Gegenstromanordnung erhalten werden. Dies kann zu einer besseren Wärmverteilung im Katalysatorsystem führen.

Das Katalysatorsystem der vorliegenden Erfindung kann auf verschiedenen Wegen hergestellt werden.

Sofern der erste Bereich und der mindestens eine weitere Bereich durch eine Trennvorrichtung voneinander getrennt sind, können die Bereiche unabhängig voneinander mit erstem beziehungsweise mindestens einem weiteren Katalysatormaterial gefüllt werden, z.B. in Form von Schüttgutkatalysatormaterialien.

Für den Fall, dass im fertigen Katalysatorsystem keine Trennvorrichtung zwischen erstem und mindestens einen weiteren Bereich vorliegen, kann zum Befüllen des Rohres eine temporäre Trennvorrichtung verwendet werden. Die temporäre Trennvorrichtung kann temporär den ersten Bereich von dem mindestens einen weiteren Bereich trennen. Die von der temporären Trennvorrichtung begrenzten Bereiche können unabhängig voneinander mit den jeweiligen Katalysatormaterialien befüllt werden. Anschließend an dieses Befüllen kann die temporäre Trennvorrichtung entfernt werden. Vorzugsweise wird die temporäre Trennvorrichtung so entfernt, dass es dabei nicht zu einer Durchmischung der Katalysatormaterialien kommt. Nachdem die temporäre Trennvorrichtung entfernt ist, stehen das erste Katalysatormaterial und das mindestens eine weitere Katalysatormaterial im direkten Kontakt. Dadurch kann sowohl ein effizienter Gas- als auch Stoffaustausch zwischen den Bereichen erfolgen.

Ein zweiter Aspekt der Erfindung betrifft ein Verfahren zur Spaltung von Ammoniak in Wasserstoff und Stickstoff, wobei das erfindungsgemäße Katalysatorsystem verwendet wird. Das erfindungsgemäße Katalysatorsystem ist vorzugsweise so angeordnet, dass gasförmiger Ammoniak das Rohr von der ersten Öffnung zur zweiten Öffnung hin durchströmt und beim Kontakt mit den Katalysatormaterialien des Katalysatorsystems zu Wasserstoff und Stickstoff umgesetzt werden.

Das Katalysatorsystem umfasst mindestens Rohr mit einer zentral durch das innere des Rohrs verlaufenden Achse, wobei in dem Rohr mindestens zwei koaxial angeordnete Bereiche, in Form von einem ersten Bereich entlang der zentralen Achse und mindestens einem den ersten Bereich umgebenden weiteren Bereich, ausgebildet sind, und wobei der erste Bereich ein erstes Katalysatormaterial und der mindestens eine weitere Bereich mindestens ein weiteres Katalysatormaterial enthält.

Ein Vorteil des erfindungsgemäßen Verfahrens ist, dass das Katalysatormaterial im ersten Bereich, bei höheren Temperaturen betrieben werden kann, als wenn das erste Katalysatormaterial durchgängig bis an die Wand des Rohres heranreicht.

Vorzugsweise liegt die Temperatur während des Verfahrens im ersten Bereich nicht höher als 650°C. Die Temperatur im mindestens einen weiteren Bereich, insbesondere wenn dieser mindestens eine weitere Bereich an die Innenwand des Rohrs angrenzt, liegt bevorzugt im Bereich von 650°C bis 800°C. Die
Der Druck im Inneren des Rohrs kann beispielsweise im Bereich von 1 bar bis 50 bar liegen.

Die Gastemperatur an der Auslassöffnung des Rohres kann einen Wert im Bereich von 700°C bis 900°C aufweisen.

### Bezugszeichenliste

- 110, 210, 210', 310, 310', 310", 410: Rohr
- 111, 211, 211': Erste Öffnung
- 112, 212, 212', 412: Zweite Öffnung
- 120, 220, 220', 320, 320', 320",: Erster Bereich
- 130, 230, 230', 330, 330', 330",: Mindestens ein weiterer Bereich
- d1, d1': Durchmesser des ersten Bereichs
- d2, d2`: Dicke des weiteren Bereichs
- 321, 331": Erstes Segment
- 322, 332": Zweites Segment
- A, A', A": Erstes Katalysatormaterial
- B, B', B": Mindestens ein weiteres Katalysatormaterial
- C', D": Katalysatormaterial
- 440: Auffangvorrichtung
- 450: Abgasleitung

Im Nachfolgenden wird die Erfindung anhand von Skizzen exemplarisch erläutert.

Abbildung 1 skizziert das Katalysatorsystem sowohl perspektivisch als auch in zwei Querschnitten.

Abbildung 2 zeigt bevorzugte Ausführungsformen, bei denen der Durchmesser des ersten Bereichs variiert.

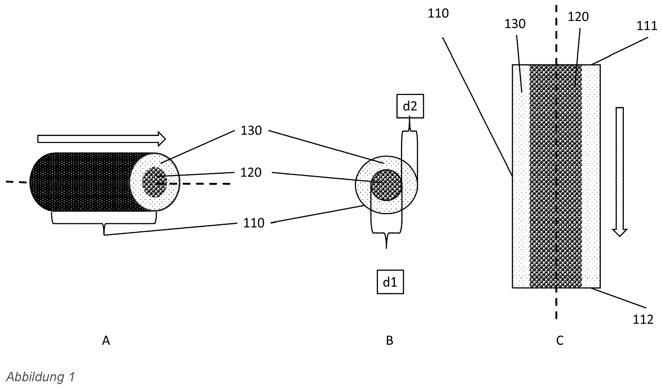

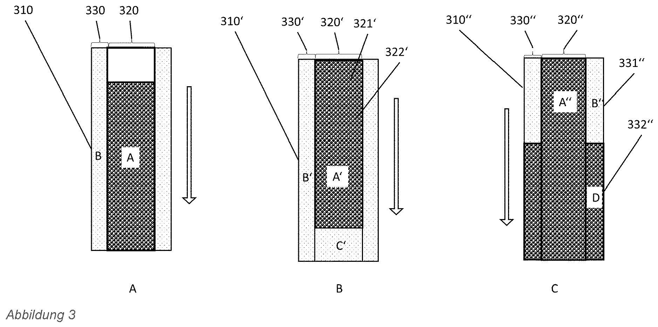

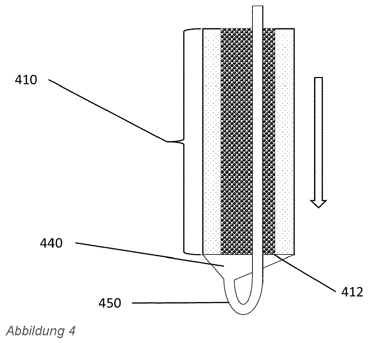

Abbildung 3 zeigt bevorzugte Ausführungsformen der Befüllung des Katalysatorsystems Abbildung 4 zeigt optionale weitere Komponenten des Katalysatorsystems Abbildung 1A zeigt eine perspektivische Darstellung des erfindungsgemäßen Katalysatorsystems wobei in dem Rohr (110) zwei Bereiche koaxial angeordnet sind. Die gestrichelte Linie zeigt die virtuelle Achse, die durch die Mitte des Rohrs verläuft. Der erste Bereich (120) ist entlang der Achse angeordnet. Der erste Bereich enthält ein erstes Katalysatormaterial. Der mindestens eine weitere Bereich (130) umgibt den ersten Bereich (120). Der mindestens eine weitere Bereich enthält mindestens ein weiteres Katalysatormaterial. Der Pfeil über dem Rohr (110) gibt die Durchflussrichtung des Gases an.

Abbildung 1 B zeigt einen Querschnitt des Katalysatorsystems aus Abbildung 1 A. Hierin gibt d1 den Durchmesser des ersten Bereichs an und d2 die Dicke des mindestens einen weiteren Bereichs.

Abbildung 1 C zeigt einen weiteren Querschnitt des Katalysatorsystems aus Abbildung 1A entlang der gestrichelt dargestellten Achse. Das Rohr (110) weist eine erste Öffnung (111) und eine zweite Öffnung (112). Der Pfeil neben Abbildung 1C zeigt die Durchflussrichtung für Gas durch das Katalysatorsystem an, wobei die Durchflussrichtung von der ersten Öffnung (111) zur zweiten Öffnung (112) gerichtet ist.

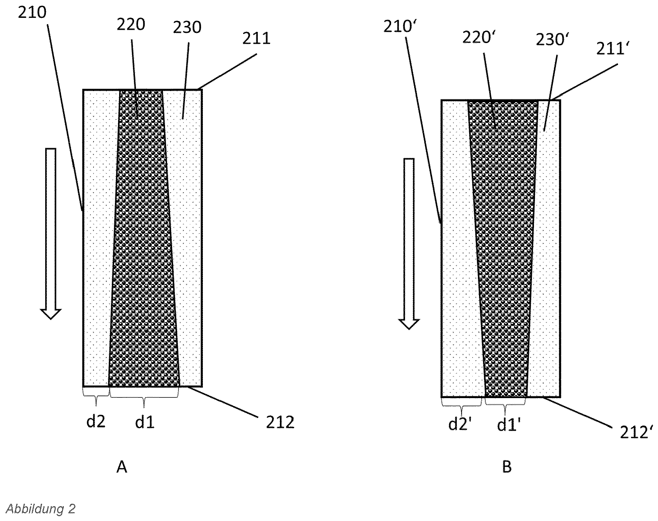

Abbildung 2 zeigt zwei unterschiedliche Ausführungsformen des Katalysatorsystems. Dabei ist in Abbildung 2A ein Katalysatorsystem dargestellt, bei der Durchmesser d1 des ersten Bereichs (220) von der ersten Öffnung (211) des Rohres (210) hin zur zweiten Öffnung (212) kontinuierlich (und hier auch linear dargestellt), zunimmt. Umgekehrt nimmt die Dicke d2 des mindestens einen weiteren Bereichs (230) von der ersten Öffnung (211) hin zur zweiten Öffnung (212) ab.

Im entgegengesetzten Fall zu Abbildung 2A nimmt in Abbildung 2B der Durchmesser d1' des ersten Bereichs (220') von der ersten Öffnung (211`) hin zur zweiten Öffnung (212') kontinuierlich ab. Umgekehrt nimmt die Dicke d2' des mindestens einen weiteren Bereichs (230') von der ersten Öffnung (21 1') hin zur zweiten Öffnung (212') zu.

In Abbildung 3 sind verschiedene mögliche Ausführungsformen der Befüllung des Katalysatorsystems dargestellt.

Abbildung 3A zeigt das erfindungsgemäße Katalysatorsystem, bei dem in dem Rohr (310) zwei Bereiche koaxial angeordnet sind. Der erste Bereich (320) ist im Inneren des Rohrs entlang der zentralen Ache (hier nicht eingezeichnet) angeordnet und der mindestens eine weitere Bereich (330) umgibt den ersten Bereich (320). Der mindestens eine weitere Bereich (330) ist vollständig mit dem mindestens einen weiteren Katalysatormaterial B gefüllt. Der erste Bereich (320) ist nur teilweise mit dem ersten Katalysatormaterial A gefüllt.

Abbildung 3B zeigt ebenfalls ein Katalysatorsystem, bei dem der erste Bereich entlang der Strömungsrichtung in zwei Segmente aufgeteilt ist. Das in Strömungsrichtung erste Segment (321') enthält ein Katalysatormaterial C. Das zweite Segment (322`) enthält ein erstes Katalysatormaterial A'. Der mindestens eine weitere Bereich (330`) enthält mindestens ein weiteres Katalysatormaterial B'. Das Katalysatormaterial C kann gleich oder verscheiden sein von dem mindestens einen weiteren Katalysatormaterial B'. Alternativ kann das Katalysatormaterial D ein anderes Katalysatormaterial sein, dass von dem ersten und dem mindestens einen weiteren Katalysatormaterial verschieden ist.

Abbildung 3C zeigt ebenfalls ein Ausgestaltung des erfindungsgemäßen Katalysatorsystems. bei dem in dem Rohr (310") zwei Bereiche koaxial angeordnet sind. Der erste Bereich (320") ist im Inneren des Rohrs entlang der zentralen Ache (hier nicht eingezeichnet) angeordnet und der mindestens eine weitere Bereich (330") umgibt den ersten Bereich (320"). Der ersten Bereich (320') ist vollständig mit einem ersten Katalysatormaterial A" gefüllt. Der mindestens eine weitere Bereich 330" ist entlang der Strömungsrichtung in zwei Segmente aufgeteilt. Das erste Segment (331") enthält mindestens ein weiteres Katalysatormaterial B". Das zweite Segment (332") enthält ein Katalysatormaterial D. Das Katalysatormaterial D kann optional das gleiche Katalysatormaterial sein wie das erste Katalysatormaterial A", wie hier dargestellt. Alternativ kann das Katalysatormaterial D ein anderes Katalysatormaterial sein, dass von dem ersten (A") und dem mindestens einen weiteren Katalysatormaterial (B") verschieden ist.

Abbildung 4 zeigt eine Ausführungsform des Katalysatorsystems bei dem an der zweiten Öffnung (412) des Rohrs (410), also an der Auslassöffnung, eine Auffangvorrichtung (440) angeordnet ist. Die Auffangvorrichtung (440) kann derart ausgebildet sein, dass sie das durch das Rohr geströmte Gas enthaltend die Reaktionsprodukte auffängt, insbesondere vollständig auffängt. An der Auffangvorrichtung (440) ist eine Abgasleitung (450) angeschlossen. Die Abgasleitung (450) kann das Abgas enthaltend die Reaktionsprodukte ableiten, zum Beispiel zu einer nachgelagerten Abtrenneinheit zur Auftrennung der Gaskomponenten. Hier dargestellt ist eine Abgasleitung, die durch das Innere des mit Katalysatormaterial gefüllten Rohres geführt ist.

## Patentansprüche

1. Katalysatorsystem zur Spaltung von Ammoniak in Wasserstoff und Stickstoff, umfassend mindestens Rohr mit einer zentral durch das innere des Rohrs verlaufenden Achse, wobei in dem Rohr mindestens zwei koaxial angeordnete Bereiche, in Form von einem ersten Bereich entlang der zentralen Achse und mindestens einem den ersten Bereich umgebenden weiteren Bereich, ausgebildet sind, und wobei der erste Bereich ein erstes Katalysatormaterial und der mindestens eine weitere Bereich mindestens ein weiteres Katalysatormaterial enthält, **dadurch gekennzeichnet, dass**
a. das erste Katalysatormaterial mindestens ein Metall aufweist, das ausgewählt ist aus der Gruppe bestehend aus Edelmetallen und Nicht-Edelmetalle, und
b. das mindestens eine weitere Katalysatormaterial mindestens ein Nicht-Edelmetall aufweist,
wobei das erste und das mindestens eine weitere Katalysatormaterial verschieden sind.

2. Katalysatorsystem gemäß Anspruch 1, wobei das erste Katalysatormaterial eine geringere Stabilität gegenüber thermischer Deaktivierung aufweist als das mindestens eine weitere Katalysatormaterial.

3. Katalysatorsystem gemäß Anspruch 1 oder 2, wobei das Edelmetall ausgewählt ist aus der Gruppe bestehend aus Platin, Palladium, Rhodium, Ruthenium und Iridium.

4. Katalysatorsystem gemäß einem der Ansprüche 1 - 3, wobei das mindestens eine Nicht-Edelmetall im ersten Katalysatormaterial ausgewählt ist aus der Gruppe bestehend aus Lithium, Nickel, Eisen und Kobalt sowie Mischungen aus mindestens zwei der genannten Nicht-Edelmetalle.

5. Katalysatorsystem gemäß einem der Ansprüche 1 - 4, wobei das mindestens eine Nicht-Edelmetall im mindestens einen weiteren Katalysatormaterial ausgewählt ist aus der Gruppe bestehend aus Lithium, Nickel, Eisen und Kobalt sowie Mischungen aus mindestens zwei der genannten Nicht-Edelmetalle.

6. Katalysatorsystem gemäß einem der Ansprüche 1 - 5, wobei das erste und das mindestens eine weitere Katalysatormaterial räumlich getrennt vorliegen und vorzugsweise im mindestens einen weiteren Bereich mit dem mindestens einen weiteren Katalysatormaterial nicht mehr als 10 Gew.-% des ersten Katalysatormaterials vorliegen.

7. Katalysatorsystem gemäß einem der Ansprüche 1 - 6, wobei zwischen dem ersten Bereich und dem mindestens eine weiteren Bereich eine Trennvorrichtung angeordnet ist, die vorzugsweise ausgewählt ist aus einem Lochblech, einem Gitter und einem Netz oder Kombinationen daraus.

8. Katalysatorsystem gemäß einem der Ansprüche 1 - 7, wobei der mindestens eine weitere Bereich mit dem mindestens einen weiteren Katalysatormaterial den Kern teilweise oder vollständig umgibt.

9. Katalysatorsystem gemäß einem der Ansprüche 1 - 8, wobei das Rohr mit dem mindestens einen weiteren Katalysatormaterial im Kontakt steht und das mindestens eine weitere Katalysatormaterial mit dem ersten Katalysatormaterial im Kontakt steht.

10. Katalysatorsystem gemäß einem der Ansprüche 1 - 9, wobei die Dicke d2 des mindestens einen weiteren Bereichs, der den ersten Bereich umgibt, gemessen senkrecht zur zentral verlaufenden Achse von einer ersten Öffnung des Rohres hin zur zweiten Öffnung des Rohres zunimmt.

11. Katalysatorsystem gemäß einem der Ansprüche 1 - 10, wobei der Durchmesser des Kernbereichs d1, gemessen senkrecht zur zentral verlaufenden Achse von einer Öffnung des Rohres hin zur anderen Öffnung des Rohres zunimmt.

12. Katalysatorsystem gemäß einem der Ansprüche 1 - 11, wobei an der zweiten Öffnung des Rohres eine Ableitvorrichtung für die Reaktionsprodukte angeordnet ist, und wobei die Ableitvorrichtung durch das Katalysatorbett geführt wird.

13. Verfahren zur Zersetzung von Ammoniak in Wasserstoff und Stickstoff, wobei das Katalysatorsystem gemäß einem der Ansprüchen 1-12 verwendet wird.

14. Verfahren gemäß Anspruch 13, wobei die Temperatur des Rohres einen Wert von mindestens 700°C aufweist.

15. Verfahren gemäß Anspruch 14, wobei die Gastemperatur an der Auslassöffnung einen Wert im Bereich von 750°C bis 900°C aufweist.
